# FASCICULE DE BREVET EUROPEEN

(11) **EP 2 055 988 B1**
(45) Date de publication et mention de la délivrance du brevet: **17.03.2010**
(21) Numéro de dépôt: 08167725.4
(22) Date de dépôt: 28.10.2008
(51) Int. Cl.: F16H 3/093

(54) **Boîte de vitesses à double synchroniseur comprenant au moins deux arbres secondaires et procédés de changement de rapport montant et descendant associés**
Getriebe mit Doppelsynchronisierungsvorrichtung, das mindestens zwei Sekundärwellen umfasst, und Verfahren zur Veränderung des damit verbundenen aufsteigenden und absteigenden Übersetzungsverhältnisses
Gearbox with double synchroniser comprising at least two secondary shafts and associated upward and downward shifting methods

(30) Priorité: 29.10.2007 FR 0758648
(43) Date de publication de la demande: 06.05.2009
(73) Titulaire: Peugeot Citroën Automobiles SA, 78140 Vélizy-Villacoublay (FR)
(72) Inventeur: Lelasseux, Xavier, 92150 Suresnes (FR)

(56) Documents cités:
- EP-A- 0 239 553
- FR-A- 2 841 956
- US-A- 5 311 789
- US-A1- 2004 162 180
- US-A1- 2005 115 345

## Description

. L'invention concerne une boîte de vitesses à double synchroniseur comprenant au moins deux arbres secondaires et des procédés de changement de rapport montant et descendant associés. L'invention a notamment pour but d'améliorer le ressenti des changements de rapport de la boîte de vitesses en évitant les ruptures de couple.

. L'invention trouve une application particulièrement avantageuse dans le domaine des boîtes de vitesses manuelles pilotées (BVMP) utilisées entre un dispositif de propulsion, tel qu'un moteur thermique ou une machine électrique, et un organe à entraîner, tel que des roues de véhicule automobile ou de moto.

. Les véhicules automobiles connus comportent une chaîne de traction formée par un dispositif de propulsion (comportant un moteur thermique et/ou une machine électrique), un embrayage, et une boîte de vitesses qui entraîne les roues. L'embrayage est relié d'une part au dispositif de propulsion et d'autre part à la boîte de vitesses, elle-même reliée aux roues du véhicule.

. Plus précisément, la boîte de vitesses comporte un arbre primaire relié à l'embrayage et un arbre secondaire relié aux roues du véhicule, ces deux arbres étant reliés angulairement entre eux par l'intermédiaire d'engrenages formant les rapports de vitesse.

. Chaque engrenage comporte une roue liée en rotation à un des arbres et un pignon fou monté sur l'autre arbre. Des manchons de crabotage sont utilisés pour lier sélectivement les pignons fous à l'arbre sur lequel ils sont montés afin d'assurer un changement de rapport.

. A cet effet, le manchon est lié en rotation à son arbre mais est mobile axialement pour permettre l'accrochage avec le pignon fou. On parle de crabotage lorsque le manchon entre en coopération avec un pignon fou de sorte qu'un rapport de vitesse est engagé, et de décrabotage lorsque le manchon se dégage du pignon fou de sorte que le rapport est désengagé.

. Les boîtes de vitesses à crabots classiques présentent l'inconvénient de générer une rupture de couple pendant le changement de rapport. La durée de la rupture de couple est liée aux étapes de coupure des gaz, débrayage, passage de vitesse, embrayage et remise des gaz, mais aussi au temps de synchronisation qui découle de la nécessité de rendre compatibles les vitesses de rotation des arbres de la boîte de vitesses.

. Le document FR-2841956 décrit une boîte de vitesses comportant un rapport de première monté sur un système de roue libre, de sorte que le changement de rapport peut être effectué sous couple pour passer de la première à la deuxième. Toutefois un tel système ne permet pas d'effectuer tous les changements de rapport sous couple.
Le documents US2005-0115345 décrit une boîte de vitesse selon le preambule de la revendication 1.

. L'invention se propose notamment de résoudre le problème de rupture de couple pour tous les changements de rapport de vitesse.

. A cette fin, l'invention met en oeuvre, sur une boîte de vitesses à deux arbres secondaires, un double synchroniseur composé d'un premier et un deuxième synchroniseurs qui sont de préférence indépendants des manchons de crabotage.

. Le premier synchroniseur est associé à un rapport élevé de la boîte de vitesses. Par rapport élevé, on entend un des deux derniers rapports de la boîte de vitesses. Ainsi, pour une boîte à six rapports, le premier synchroniseur est fixé au rapport de cinquième ou de sixième.

. Toutefois de préférence, le premier synchroniseur est associé au rapport le plus élevé de la boîte de vitesses, afin de pouvoir obtenir une réduction de la vitesse de l'arbre primaire sur tous les rapports. Dans l'exemple de la boîte de vitesses à six rapports, le premier synchroniseur est donc fixé au rapport de sixième.

. Tandis que le deuxième synchroniseur est associé à un rapport intermédiaire autre que la première et la marche arrière, afin de combler les ruptures de couple pour les rapports inférieurs. Dans l'exemple de la boîte de vitesses à six rapports, le deuxième synchroniseur est par exemple associé au rapport de troisième.

. En variante, le premier synchroniseur est associé au rapport juste inférieur au rapport maximal, tandis que le deuxième synchroniseur est associé avec n'importe quel autre rapport pourvu que ces deux rapports soient séparés au moins d'une vitesse.

. De préférence, les synchroniseurs sont positionnés entre deux pignons fous montés sur un même arbre, de sorte que les manchons de crabotage de ces pignons sont placés de l'autre coté de ces pignons. Ainsi, chacun des deux pignons fous a d'un coté son organe de crabotage et de l'autre un organe de synchronisation.

. Lors des changements de rapport montants effectués dans la plage comprise entre le rapport de première et le rapport intermédiaire associé au deuxième synchroniseur, on transmet du couple aux roues soit via le deuxième synchroniseur seul, soit via le premier et le deuxième synchroniseurs. Dans l'exemple de la boîte de vitesses à six rapports, lors des changements de rapport du type 1-2, 2-3 ou 1-3, on transmet du couple aux roues soit via le synchroniseur de troisième seul, soit via les synchroniseurs de troisième et de sixième.

. Tandis que lors des changements de rapport montants effectués dans la plage comprise entre le rapport associé au deuxième synchroniseur et le rapport maximal, on transmet du couple aux roues uniquement via le premier synchroniseur. Dans l'exemple de la boîte à six rapports, lors des changements de rapport 3-4, 3-5, 3-6, 4-5, 4-6 et 5-6, on transmet du couple aux roues uniquement via le synchroniseur de sixième.

. Lors des changements de rapport montants avec saut du rapport intermédiaire associé au deuxième synchroniseur, soit le premier synchroniseur est utilisé seul, soit le deuxième synchroniseur est utilisé jusqu'à ce que la vitesse équivalente du rapport intermédiaire soit atteinte puis le premier synchroniseur est alors utilisé, soit les deux synchroniseurs sont utilisés et une roue libre associée au synchroniseur du rapport intermédiaire déconnecte ce synchroniseur dès que la vitesse équivalente correspondant à ce rapport est atteinte.

. Dans l'exemple de la boîte à six rapports, pour des changements du type 2-4 ou 1-4, soit le synchroniseur de sixième est utilisé seul, soit le synchroniseur de troisième est utilisé jusqu'à ce que la vitesse équivalente du rapport de troisième est atteinte puis le synchroniseur de sixième est alors utilisé, soit les deux synchroniseurs de troisième et de sixième sont utilisés et une roue libre sur le synchroniseur de troisième déconnecte le synchroniseur de troisième dès que la vitesse équivalente correspondant au rapport de troisième est atteinte.

. Dans une réalisation, les synchroniseurs agissent simultanément sur les pignons auxquels ils sont associés de manière à les synchroniser à l'arbre secondaire. Les démultiplications étant différentes entre les deux pignons associés aux synchroniseurs (pignon du rapport intermédiaire et pignon du rapport maximal), cette réalisation ne fonctionne de manière optimale que dans certaines conditions initiales de vitesse de l'arbre.

. En effet, dans le cas où le rapport engagé est inférieur ou égal au rapport associé au deuxième synchroniseur, le fait de passer du couple simultanément via les deux rapports permet de réduire la vitesse de l'arbre primaire. Dans l'exemple de la boîte à 6 rapports, lors d'un changement de rapport 1-2, 1-3 ou 2-3, le fait d'actionner les synchroniseurs de troisième et de sixième permet de réduire la vitesse de l'arbre primaire.

. En revanche, si le rapport précédemment engagé est compris entre le rapport intermédiaire associé au deuxième synchroniseur et le rapport maximal, le synchroniseur du rapport maximal aura tendance à faire chuter le régime tandis que le synchroniseur du rapport intermédiaire aura tendance à le faire augmenter de manière opposée. Dans l'exemple de la boîte de vitesses à 6 rapports, si le rapport précédemment engagé est compris entre la troisième et la sixième, le synchroniseur de sixième aura tendance à faire chuter le régime tandis que le synchroniseur de troisième aura tendance à le faire augmenter de manière opposée.

. Pour résoudre ce problème, on implante une roue libre entre le pignon du rapport intermédiaire et le synchroniseur qui lui est associé, de sorte que le couple du synchroniseur du rapport intermédiaire n'est transmis au pignon que lorsque la vitesse du pignon du rapport intermédiaire est inférieure à celle de l'arbre primaire. Dans l'exemple de la boîte à six rapports, la roue libre est implantée entre le pignon et le synchroniseur du rapport de troisième.

. Toutefois même sans roue libre, il serait possible d'utiliser simultanément les synchroniseurs du rapport intermédiaire et du rapport maximal pour passer du couple aux roues. Dans ce cas, le synchroniseur du rapport maximal est de préférence dimensionné pour transmettre plus de couple aux roues que le synchroniseur du rapport intermédiaire.

. Lors des changements de rapport descendants, les synchroniseurs ne servent pas à réduire la vitesse, mais à transmettre du couple aux roues pendant que le régime de l'arbre primaire augmente jusqu'au régime cible sous l'action du couple transmis par l'embrayage.

. Lors des changements de rapport descendants effectués dans la plage comprise entre le rapport maximal et le rapport intermédiaire associé au deuxième synchroniseur, seul le synchroniseur du rapport maximal est utilisé pour transmettre du couple aux roues. Ainsi dans l'exemple de la boîte à 6 rapports, pour des changements de rapport 6-5, 5-4, 4-3, 6-4, 6-3 et 5-3, seul le synchroniseur de sixième est utilisé.

. Lors des changements de rapports descendants effectués dans la plage comprise entre le rapport intermédiaire associé au deuxième synchroniseur et le rapport de première, le synchroniseur du rapport intermédiaire peut être utilisé seul ou avec le synchroniseur du rapport maximal. Ainsi, dans l'exemple de la boîte à six rapports, pour des changements de rapport 3-2, 3-1 et 2-1, le synchroniseur de troisième peut être utilisé seul ou avec le synchroniseur de sixième.

. Lors des changements de rapport descendants effectués avec saut du rapport intermédiaire, soit on utilise les deux synchroniseurs et une roue libre qui déconnecte le synchroniseur du rapport intermédiaire lorsque la vitesse de l'arbre primaire devient supérieure à la vitesse correspondant à ce rapport, soit on utilise uniquement le synchroniseur du rapport maximal, soit on utilise le synchroniseur du rapport maximal puis le synchroniseur du rapport intermédiaire:

. Dans l'exemple de la boîte à six rapports, lors les changements de rapport montants avec saut du rapport de troisième du type 4-2, 4-1, 5-2, 5-1, 6-2, 6-1, soit on utilise les deux synchroniseurs avec enclenchement automatique de la roue libre du synchroniseur de troisième lorsque le régime de l'arbre primaire est inférieur au régime de troisième, soit on n'utilise que le synchroniseur de sixième soit on utilise le synchroniseur de sixième puis le synchroniseur de troisième.

. Il est bien évident que dans la mesure du possible, les deux synchroniseurs sont utilisés en même temps de manière à combler le plus possible les ruptures du couple transmis à la roue lors du changement de vitesses afin de réduire la variation de couple.

. L'invention peut être mise en oeuvre avec des crabots classiques, des crabots bi-étages ou des crabots auto-éjecteurs montés sur tous les rapports.

. L'invention concerne donc une boîte de vitesses de type manuelle pilotée caractérisée en ce qu'elle comporte :
- un arbre primaire destiné à être relié à un moteur thermique, et au moins deux arbres secondaires destinés à être reliés aux roues du véhicule, l'arbre primaire étant lié angulairement aux deux arbres secondaires via des engrenages formant les rapports de vitesse, les deux arbres secondaires étant liés aux roues via une descente de pont,
- ces engrenages étant formés chacun par une roue solidaire en rotation de l'arbre primaire et par un pignon fou monté sur un des deux arbres secondaires qui engrènent entre eux, ou par une roue solidaire en rotation à un des deux arbres secondaires et par un pignon fou monté sur l'arbre primaire qui engrènent entre eux,
- des manchons de crabotage associables chacun à au moins un pignon fou, ces manchons de crabotage assurant les changements de rapport de vitesse,
cette boîte de vitesse comportant en outre :
- un premier synchroniseur associé à un rapport de vitesse élevé et un deuxième synchroniseur associé à un rapport de vitesse intermédiaire autre que la première et la marche arrière.

. Selon une réalisation, le premier synchroniseur est associé au rapport de vitesse le plus élevé.

. Selon une réalisation, la boîte de vitesses comporte au moins quatre rapports, le premier synchroniseur étant associé au rapport le plus élevé, le deuxième synchroniseur étant associé au rapport intermédiaire.

. Selon une réalisation, la boîte de vitesses comporte six rapports de vitesse, le premier synchroniseur étant associé au rapport de sixième, le deuxième synchroniseur étant associé au rapport de troisième.

. Selon une réalisation, les rapports de vitesses sont rassemblés par paire avec un seul manchon de crabotage par paire.

. Selon une réalisation, les synchroniseurs sont positionnés entre les pignons fous des rapports auxquels ils sont associés, de sorte que chacun de ces pignons fous présente d'un côté un manchon de crabotage et de l'autre un synchroniseur.

. Selon une réalisation, les rapports de première, troisième, cinquième et sixième sont formés chacun par une roue liée en rotation à l'arbre primaire et un pignon fou lié au premier arbre secondaire. Les rapports de deuxième, et quatrième, sont formés chacun par une roue liée en rotation à l'arbre primaire et un pignon fou lié au deuxième arbre secondaire.

. Selon une réalisation, un premier et un deuxième manchons montés sur le premier arbre secondaire sont respectivement positionnés entre les pignons fous des rapports de première et de troisième, et entre les pignons fous des rapports de cinquième et de sixième. Un troisième manchon monté sur le deuxième arbre secondaire est positionné entre les pignons fous des rapports de deuxième et de quatrième.

. Selon une réalisation, le pignon fou du rapport de sixième présente d'un côté le manchon et de l'autre le premier synchroniseur, le pignon fou du rapport de troisième présente d'un coté le manchon et de l'autre le deuxième synchroniseur.

. Selon une réalisation, les synchroniseurs sont intégrés dans un unique synchroniseur double déplacé axialement au moyen d'une fourchette.

. Selon une réalisation, les synchroniseurs sont actionnables séparément par deux fourchettes indépendantes.

. Selon une réalisation, les deux synchroniseurs sont actionnables simultanément au moyen d'un dispositif de commande qui exerce simultanément une force sur les synchroniseurs.

. Selon une réalisation, une roue libre est implantée entre le pignons fou du rapport intermédiaire et le deuxième synchroniseur.

. Selon une réalisation, les synchroniseurs utilisés sont des synchroniseurs de type « Borg Warner » ou « New Process », de grande capacité énergétique, ou des embrayages de type multidisques humides, ou même des embrayages secs, ou des synchroniseurs de type multi-cônes humides.

. L'invention concerne en outre un procédé de changement de rapport de vitesses montant avec couple positif pour passer d'un rapport initial N à un rapport final N+1, ce procédé mettant en oeuvre la boîte de vitesses selon l'invention et comportant les étapes suivantes :
- ouvrir l'embrayage de manière à le mettre à la limite du couple fourni par le moteur thermique,
- actionner le ou les synchroniseurs de manière à réduire progressivement le couple transmis par le rapport initial N jusqu'au couple nul,
- piloter le régime de l'arbre primaire jusqu'à atteindre sensiblement le régime du rapport final N+1 à engager par action sur le ou les synchroniseurs,
- engager le rapport final N+1,
- réduire progressivement le couple transmis par le ou les synchroniseurs de sorte que tout le couple soit transmis aux roues par le rapport final N+1, et
- fermer progressivement l'embrayage.

. Selon une mise en oeuvre lors des passages montants effectués dans la plage comprise entre le rapport de première et le rapport intermédiaire associé au deuxième synchroniseur, on actionne soit le deuxième synchroniseur seul, soit le premier et le deuxième synchroniseurs ensemble.

. Selon une mise en oeuvre, lors des passages montants effectués dans la plage comprise entre le rapport associé au deuxième synchroniseur et le rapport maximal, on actionne uniquement le premier synchroniseur.

. Selon une mise en oeuvre, lors des changements de rapport montants avec saut du rapport intermédiaire associé au deuxième synchroniseur, soit le premier synchroniseur est utilisé seul, soit le deuxième synchroniseur est utilisé jusqu'à ce que la vitesse équivalente du rapport intermédiaire soit atteinte puis le premier synchroniseur est utilisé, soit les deux synchroniseurs sont utilisés et une roue libre associée au deuxième synchroniseur déconnecte ce synchroniseur dès que la vitesse équivalente de l'arbre primaire correspondant au rapport intermédiaire est atteinte.

. L'invention concerne en outre un procédé de changement de rapport de vitesses descendant avec couple positif pour passer d'un rapport initial N à un rapport final N-1, ce procédé mettant en oeuvre la boîte 4 de vitesses selon l'invention et comportant les étapes suivantes :
- ouvrir l'embrayage de manière à le mettre à la limite du couple fourni par le moteur thermique,
- accélérer le moteur thermique jusqu'à ce que l'arbre primaire atteigne sensiblement le régime du rapport final N-1 à engager,
- actionner le ou les synchroniseurs de manière à réduire progressivement le couple transmis par le rapport initial N,
- dégager le rapport initial N,
- actionner le ou les synchroniseurs de manière à réduire progressivement le couple transmis via ces synchroniseurs, la réduction du couple étant commandée de manière à augmenter le régime de l'arbre primaire jusqu'au régime du rapport final N-1 à engager,
- engager le rapport final N-1,
- réduire progressivement le couple transmis par le ou les synchroniseurs de manière que tout le couple soit transmis aux roues par le rapport engagé N-1, et
- fermer progressivement l'embrayage.

. Selon une mise en oeuvre, l'utilisation des synchroniseurs dépend du niveau de couple à transmettre lors du changement de rapport, le premier synchroniseur étant utilisé pour les changements de rapport à faible couple, le deuxième synchroniseur étant utilisé pour les changements de rapport à couple élevé.

. L'invention sera mieux comprise à la lecture de la description qui suit et à l'examen des figures qui l'accompagnent. Ces figures ne sont données qu'à titre illustratif mais nullement limitatif de l'invention. Elles montrent :

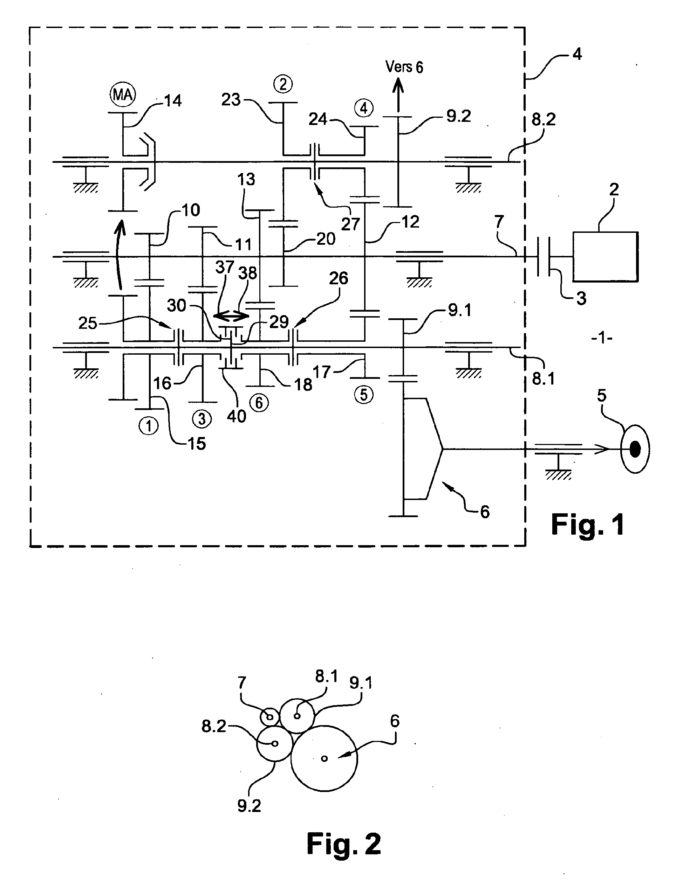

. Figure 1 : une représentation schématique d'une chaîne de traction comportant une boîte de vitesses à 6 rapports selon l'invention à deux arbres secondaires munie de synchroniseurs associés à deux de ses rapports ;

. Figure 2 : une vue de côté de l'agencement des arbres primaire et secondaires et de la descente de pont de la boîte de vitesse selon l'invention.

. La figure 1 montre une chaîne 1 de traction d'un véhicule automobile formée par un moteur 2 thermique, un embrayage 3, une boîte 4 de vitesses délimitée par une ligne fermée discontinue, et des axes de sortie du différentiel vers les roues 5. L'embrayage 3 est relié d'une part au moteur 2 thermique et d'autre part à la boîte 4 de vitesses. Le différentiel 6 assure la liaison entre la boîte de vitesses 4 et les roues 5 du véhicule.

. En variante, la chaîne 1 de traction est complétée par une machine électrique (non représentée) positionnée sur l'arbre d'entrée de la boîte 4 de vitesse entre l'embrayage 3 et la boîte 4 de vitesses.

. Plus précisément, la boîte 4 de vitesses comporte un arbre 7 primaire lié en rotation aux deux arbres secondaires 8.1, 8.2 via des engrenages formant les rapports de vitesse 1 à 6 entourés sur la figure. Ces deux arbres secondaires 8.1, 8.2 sont liés en rotation avec la descente de pont 6 via les roues 9.1 et 9.2, comme représenté sur la figure 2.

. Les rapports de première, troisième, cinquième et sixième sont formés chacun par une roue 10-13 liée en rotation à l'arbre 7 primaire et un pignon fou 15-18 lié à l'arbre secondaire 8.1. Les rapports de deuxième, et quatrième, sont formés chacun par une roue 20, 12 liée en rotation à l'arbre primaire 7 et un pignon fou 23, 24 lié à l'arbre secondaire 8.2. La marche arrière est assurée par un engrenage formé par la roue 10, le pignon fou 15 et la roue 14 permettant de changer le sens de rotation des roues 5.

. Ces rapports de vitesses sont rassemblés par paire avec un seul manchon de crabotage 25-27 par paire. Ainsi les manchons 25 et 26 montés sur l'arbre secondaire 8.1 sont respectivement positionnés entre les rapports de première et de troisième, et entre les rapports de cinquième et de sixième. Le manchon 27 monté sur l'arbre secondaire 8.2 est positionné entre les rapports de deuxième et de quatrième.

. Chaque manchon 25-27 est lié en rotation sur l'arbre sur lequel il est monté et mobile axialement suivant l'axe de cet arbre. Chaque manchon 25-27 engage l'un des deux pignons fous entre lesquels il se situe par déplacement dans une direction et l'autre pignon par déplacement dans l'autre direction. A cet effet, chaque manchon 25-27 comporte une couronne de crabots destinés à entrer en coopération avec les crabots des pignons fous auxquels ils sont associés.

. En outre, un premier synchroniseur 29 est fixé au rapport le plus élevé, ici le rapport de sixième. Et un deuxième synchroniseur 30 est fixé sur un rapport intermédiaire, ici le rapport de troisième.

. Ces synchroniseurs 29, 30 ont pour rôle d'éviter les ruptures de couple lors de ces changements de rapport. A cet effet, chacun de ces synchroniseurs 29, 30 est apte à assurer par frottement une liaison mécanique entre l'arbre sur lequel il est monté et le pignon fou auquel il est associé, de manière à transmettre du couple aux roues pendant le changement de rapport.

. Ces synchroniseurs 29, 30 sont positionnés entre les pignon fous 16, 18 des rapports auxquels ils sont associés, de sorte que chacun de ces pignons présente d'un côté un manchon de crabotage et de l'autre un synchroniseur. Ainsi, le pignon fou 18 du rapport de sixième présente d'un côté le manchon 26 et de l'autre le synchroniseur 29. Tandis que le pignon fou 16 du rapport de troisième présente d'un coté le manchon 25 et de l'autre le synchroniseur 30.

. Ces synchroniseurs 29, 30 sont intégrés dans un seul synchroniseur double 29, 30 déplacé axialement au moyen d'une fourchette 40. Lorsque ce synchroniseur double est déplacé dans la direction 37 par la fourchette 40, le synchroniseur 30 entre en frottement contre le pignon 16 du rapport de troisième, tandis que le synchroniseur 29 s'éloigne du pignon 18 du rapport de sixième. Lorsque le synchroniseur double est déplacé dans la direction 38 par la fourchette 40, le synchroniseur 29 entre en frottement contre le pignon 18 du rapport de sixième, tandis que le synchroniseur 30 s'éloigne du pignon 16 du rapport de troisième.

. En variante, les synchroniseurs 29, 30 sont actionnables séparément par deux fourchettes indépendantes. Un tel mode de réalisation permet d'actionner les deux synchroniseurs 29, 30 en même temps afin de transmettre un maximum de couple aux roues.

. En variante, la boîte de vitesses 4 comporte plus ou moins de six rapports et le synchroniseur 30 est associé à un rapport inférieur ou supérieur au rapport de troisième.

. En variante, les deux synchroniseurs 29, 30 sont actionnables simultanément au moyen d'un dispositif de commande qui exerce simultanément une force sur les synchroniseurs 29, 30.

. Une roue libre peut alors être implantée entre le pignon fou 16 de troisième et le synchroniseur 30.

. Lorsque le synchroniseur 30 est actionné contre le pignon fou 16 de troisième et tant que la vitesse de l'arbre primaire 7 est supérieure à la vitesse de ce pignon fou 16, la roue libre connecte le synchroniseur 30 au pignon fou 16 de sorte que le synchroniseur 30 transmet du couple aux roues 5. Et dès que la vitesse de l'arbre primaire 7 est inférieure à la vitesse du pignon fou 16 de troisième, la roue libre déconnecte le synchroniseur 30 du pignon fou 16 de troisième de sorte que le synchroniseur 30 ne transmet plus de couple aux roues 5.

. Les synchroniseurs 29, 30 utilisés peuvent être par exemple des synchroniseurs classiques, par exemple de type « Borg Warner » ou « New Process », de grande capacité énergétique, mais aussi des embrayages de type multidisques humides, ou même des embrayages secs. De préférence, les synchroniseurs 29, 30 présentent une architecture du type à multi-cônes humides.

. En variante, certains ou tous les rapports de vitesse peuvent être formés chacun par une roue solidaire en rotation à un des deux arbres secondaires 8.1, 8.2 et par un pignon fou monté sur l'arbre primaire 7 qui engrènent entre eux.

. En variante, la boîte de vitesses comporte plus de deux arbres secondaires.

. Lors d'un changement de rapport montant du rapport N vers le rapport N+1 sous couple moteur (« tirage »), on met en en oeuvre les étapes décrites ci-après.

. Dans une première étape, le manchon associé au rapport N et le manchon associé au rapport N+1 étant respectivement craboté et décraboté, l'embrayage 3 est ouvert de manière à être à la limite du couple fourni par le moteur 2 thermique.

. Dans une deuxième étape, le ou les synchroniseurs 29, 30 sont progressivement actionnés de façon à diminuer la vitesse de l'arbre primaire 7 et à transmettre un couple de dérivation aux roues 5.

. Pour des changements de rapport effectués dans la plage comprise entre le rapport de première et le rapport de troisième, soit le synchroniseur 30 de troisième est actionné seul, soit les synchroniseurs 29, 30 de troisième et de sixième sont actionnés ensemble.

. Pour des changements de rapport effectués dans la plage comprise entre le rapport de troisième et le rapport de sixième, le synchroniseur 29 seul est actionné.

. Pour des changements de rapport avec saut du rapport de troisième, le premier synchroniseur 29 est actionné seul. En variante, le deuxième synchroniseur 30 est actionné jusqu'à ce que la vitesse équivalente du rapport de troisième soit atteinte puis le premier synchroniseur 29 est utilisé. En variante, les deux synchroniseurs sont utilisés et la roue libre associée au synchroniseur 30 de troisième déconnecte ce synchroniseur dès que la vitesse équivalente correspondant au rapport de troisième est atteinte.

. Dans une troisième étape, l'arbre 7 primaire est piloté jusqu'à atteindre sensiblement le régime du rapport final N+1 à engager par action sur le ou les synchroniseurs 29, 30.

. Dans une quatrième étape le rapport final N+1 est engagé par crabotage.

. Dans une cinquième étape, le couple transmis par le ou les synchroniseurs 29, 30 est réduit progressivement, de sorte que tout le couple soit transmis aux roues 5 par le rapport final N+1.

. Dans une sixième étape, l'embrayage 3 est fermé progressivement.

. On remarque que d'une part, un couple de dérivation a été transmis par le ou les synchroniseurs 29, 30 pendant le changement de rapport, et d'autre part, que ce couple de dérivation appliqué a permis d'égaliser les vitesses de rotation du manchon et du pignon correspondant au rapport cible, évitant ainsi le choc de crabotage.

. En outre, il est possible d'effectuer des changements de rapport de type descendant sous couple (« kick down ») du rapport N au rapport N-1 grâce aux synchroniseurs 29, 30. Ce changement de rapport est effectué suivant la séquence décrite ci-après.

. Dans une première étape, l'embrayage 3 est mis en phase de glissement de manière à être à la limite du couple fourni par le moteur 2 thermique.

. Dans une deuxième étape, le moteur 2 thermique est accéléré jusqu'à ce que l'arbre primaire 7 atteigne sensiblement le régime du rapport final N-1 à engager.

. Dans une troisième étape, le ou les synchroniseurs 29, 30 sont actionnés de manière à réduire le couple transmis par le rapport initial N. Dans un exemple le ou les synchroniseurs 29, 30 sont actionnés, de sorte que moins de 50% du couple transmis passe par le rapport initial N.

. Dans une quatrième étape, le rapport initial N est dégagé, le couple étant alors transmis aux roues 5 via le rapport associé au ou aux synchroniseurs 29, 30 actionnés.

. Dans une cinquième étape, le ou les synchroniseurs 29, 30 sont actionnés de manière à réduire progressivement le couple transmis via ces synchroniseurs 29, 30. La réduction du couple transmis par les synchroniseurs 29, 30 est effectuée de sorte que le régime de l'arbre primaire 7 augmente jusqu'au régime cible. En effet, lorsqu'on réduit le couple transmis par le ou les synchroniseurs 29, 30, le régime de l'arbre primaire 7 augmente car cet arbre 7 est en équilibre entre le couple transmis par l'embrayage 3 et le couple transmis par le ou les synchroniseurs 29, 30.

. Dans une sixième étape, le rapport final N-1 est engagé en crabotant le manchon qui lui est associé.

. Dans une septième étape, le couple transmis par le ou les synchroniseurs 29, 30 est réduit progressivement jusqu'à un couple nul de manière que tout le couple soit transmis aux roues 5 par le rapport engagé.

. Dans une huitième étape, l'embrayage 3 est fermé progressivement.

. Pour des changements de rapport descendants effectués dans la plage comprise entre le rapport de sixième et le rapport de troisième, seul le premier synchroniseur 29 est utilisé.

. Pour des changements de rapports descendants effectués dans la plage comprise entre le rapport de troisième et la première, le deuxième synchroniseur 30 peut être utilisé seul ou avec le premier synchroniseur 29.

. Pour des changements de rapport descendants effectués avec saut du rapport de troisième, le premier synchroniseur 29 uniquement est utilisé. En variante, le premier synchroniseur 29 est d'abord utilisé jusqu'à ce que le régime de l'arbre primaire 7 devienne supérieur à la vitesse correspondant au rapport de troisième puis le synchroniseur 30 du rapport de troisième est utilisé. En variante, les deux synchroniseurs 29, 30 sont utilisés, la roue libre 47 déconnectant le synchroniseur 30 du rapport de troisième lorsque la vitesse de l'arbre primaire 7 est inférieure à la vitesse correspondant à ce rapport.

. Dans une mise en oeuvre, l'utilisation des synchroniseurs 29, 30 dépend du niveau de couple à transmettre lors du changement de rapport (couple élevé lors d'accélérations du véhicule élevées ou couple faible lors d'accélérations du véhicule faibles).

. Ainsi, le synchroniseur 30 positionné sur le plus petit rapport permet lors d'un changement de rapport, (1-2) par exemple, de transmettre plus de couple que le synchroniseur 29 positionné sur le rapport le plus élevé. Le synchroniseur 30 est donc de préférence utilisé pour des changements de rapport à couple élevé. Par couple élevé, on entend un couple compris entre 30 et 100% du couple maximal du moteur. Cette plage de valeurs est susceptible de varier en fonction du poids du véhicule.

. Toutefois, la précision du couple transmis par le synchroniseur 30 est plus faible qu'avec le synchroniseur 29 et le risque d'avoir des à-coups plus grands. Ce défaut acceptable pour des changements de rapport à couple élevé peut devenir gênant lors de changements de rapport à faible couple. Par faible couple, on entend un couple compris entre 0 et 70% du couple moteur maximal. Cette plage de valeurs est susceptible de varier en fonction du poids du véhicule.

. En conséquence, lors de ces passages à faible couple, on utilise le synchroniseur 29 qui permet, à iso-couple sur l'organe, d'avoir un niveau de couple ressenti par le véhicule plus faible qu'avec le synchroniseur 30. Donc l'arbre primaire 7 atteindra rapidement sa vitesse cible mais avec un niveau de couple transmis à la roue plus faible que si le synchroniseur 30 était utilisé. On limite ainsi les à-coups même dans le cas où une erreur dans la mesure du couple dérivé via le synchroniseur est commise.

. L'information sur le niveau de couple est obtenue, soit de l'analyse de l'accélération du véhicule et/ou du moteur avant ou pendant le changement de rapport, soit par l'information sur le niveau de couple fourni par le moteur 2 lui-même. En fonction de ces paramètres et éventuellement du rapport engagé, du rapport cible et de la vitesse véhicule, on choisit soit l'un soit l'autre des synchroniseurs 29, 30.

## Revendications

1. Boîte (4) de vitesses de type manuelle pilotée comportant
- un arbre (7) primaire destiné à être relié à un moteur (2) thermique, et au moins deux arbres secondaires (8.1, 8.2) destinés à être reliés aux roues (5) du véhicule, l'arbre primaire (7) étant lié angulairement aux deux arbres secondaires (8.1, 8.2) via des engrenages formant les rapports de vitesse, les deux arbres secondaires (8.1, 8.2) étant liés aux roues (5) via une descente de pont (6),
- ces engrenages étant formés chacun par une roue (10-13, 20) solidaire en rotation de l'arbre primaire (7) et par un pignon fou (15-18, 23, 24) monté sur un des deux arbres secondaires (8.1, 8.2) qui engrènent entre eux, ou par une roue (10-13, 20) solidaire en rotation à un des deux arbres secondaires (8.1, 8.2) et par un pignon fou (15-18, 23, 24) monté sur l'arbre primaire (7) qui engrènent entre eux,
- des manchons (25-27) de crabotage associables chacun à au moins un pignon fou, ces manchons (25-27) de crabotage assurant les changements de rapport de vitesse,
cette boîte de vitesses (4) comportant en outre :
- un premier synchroniseur (29) associé à un rapport de vitesse élevé et un deuxième synchroniseur (30) associé à un rapport de vitesse intermédiaire autre que la première et la marche arrière ;
**caracterisé en ce que**
les synchroniseurs (29, 30) sont positionnés entre les pignons fous (16, 18) des rapports auxquels ils sont associés, de sorte que chacun de ces pignons fous (16, 18) présente d'un côté un manchon de crabotage (25, 26) et de l'autre un synchroniseur (29, 30).

2. Boîte de vitesses selon la revendication 1, **caractérisée en ce que** le premier synchroniseur est associé au rapport de vitesse le plus élevé de la boîte de vitesses.

3. Boîte de vitesses selon la revendication 1 ou 2, **caractérisée en ce qu'**elle comporte au moins quatre rapports, le premier synchroniseur (29) étant associé au rapport le plus élevé, le deuxième synchroniseur (30) étant associé au rapport intermédiaire.

4. Boîte de vitesses selon l'une des revendications 1 à 3, **caractérisée en ce qu'**elle comporte six rapports de vitesse, le premier synchroniseur (29) étant associé au rapport de sixième, le deuxième synchroniseur (30) étant associé au rapport de troisième.

5. Boîte de vitesses selon l'une des revendications 1 à 4, **caractérisée en ce que** les rapports de vitesses sont rassemblés par paire avec un seul manchon de crabotage (25-27) par paire.

6. Boîte de vitesses selon la revendication 5, **caractérisée en ce que** :
- les rapports de première, troisième, cinquième et sixième sont formés chacun par une roue (10-13) liée en rotation à l'arbre (7) primaire et un pignon fou (15-18) lié au premier arbre secondaire (8.1),
- les rapports de deuxième, et quatrième, sont formés chacun par une roue (20, 12) liée en rotation à l'arbre primaire (7) et un pignon fou (23, 24) lié au deuxième arbre secondaire (8.2).

7. Boîte de vitesses selon la revendication 6, **caractérisée en ce que** :
- un premier et un deuxième manchons (25, 26) montés sur le premier arbre secondaire (8.1) sont respectivement positionnés entre les pignons fous (15, 16) des rapports de première et de troisième, et entre les pignons fous (17, 18) des rapports de cinquième et de sixième,
- un troisième manchon (27) monté sur le deuxième arbre secondaire (8.2) est positionné entre les pignons fous (23, 24) des rapports de deuxième et de quatrième.

8. Boîte de vitesses selon la revendication 7, **caractérisé en ce que** :
- le pignon fou (18) du rapport de sixième présente d'un côté le manchon (26) et de l'autre le premier synchroniseur (29), le pignon fou (16) du rapport de troisième présente d'un coté le manchon (25) et de l'autre le deuxième synchroniseur (30).

9. Boîte de vitesses selon l'une des revendications 1 à 8, **caractérisée en ce que** les synchroniseurs (29, 30) sont intégrés dans un unique synchroniseur double déplacé axialement au moyen d'une fourchette.

10. Boîte de vitesses selon l'une des revendications 1 à 8, **caractérisée en ce que** les synchroniseurs (29, 30) sont actionnables séparément par deux fourchettes indépendantes.

11. Boîte de vitesses selon l'une des revendications 1 à 8, **caractérisée en ce que** les deux synchroniseurs (29, 30) sont actionnables simultanément au moyen d'un dispositif de commande qui exerce simultanément une force sur les synchroniseurs (29, 30).

12. Boîte de vitesses selon la revendication 11, **caractérisée en ce que** une roue libre est implantée entre le pignon fou (16) du rapport intermédiaire et le deuxième synchroniseur (30).

13. Boîte de vitesse selon l'une des revendications 1 à 12, **caractérisée en ce que** les synchroniseurs utilisés sont des synchroniseurs de grande capacité énergétique, ou des embrayages de type multidisques humides, ou même des embrayages secs, ou des synchroniseurs de type multi-cônes humides.

14. Procédé de changement de rapport de vitesses montant avec couple positif pour passer d'un rapport initial (N) à un rapport final (N+1), ce procédé mettant en oeuvre la boîte (4) de vitesses définie selon l'une des revendications 1 à 13 et comportant les étapes suivantes :
- ouvrir l'embrayage (3) de manière à le mettre à la limite du couple fourni par le moteur (2) thermique,
- actionner le ou les synchroniseurs (29, 30) de manière à réduire progressivement le couple transmis par le rapport initial (N) jusqu'au couple nul,
- piloter le régime de l'arbre (7) primaire jusqu'à atteindre sensiblement le régime du rapport final (N+1) à engager par action sur le ou les synchroniseurs (29, 30),
- engager le rapport final (N+1),
- réduire progressivement le couple transmis par le ou les synchroniseurs (29, 30), de sorte que tout le couple soit transmis aux roues (5) par le rapport final (N+1), et
- fermer progressivement l'embrayage (3).

15. Procédé selon la revendication 14, **caractérisé en ce que** lors des passages montants effectués dans la plage comprise entre le rapport de première et le rapport intermédiaire associé au deuxième synchroniseur (30), on actionne soit le deuxième synchroniseur (30) seul, soit le premier et le deuxième synchroniseurs (29, 30) ensemble.

16. Procédé selon la revendication 14, **caractérisé en ce que** lors des passages montants effectués dans la plage comprise entre le rapport associé au deuxième synchroniseur (30) et le rapport maximal, on actionne uniquement le premier synchroniseur (29).

17. Procédé selon la revendication 14, **caractérisé en ce que** lors des changements de rapport montants avec saut du rapport intermédiaire associé au deuxième synchroniseur (30), soit le premier synchroniseur (29) est utilisé seul, soit le deuxième synchroniseur (30) est utilisé jusqu'à ce que la vitesse équivalente du rapport intermédiaire soit atteinte puis le premier synchroniseur (29) est utilisé, soit les deux synchroniseurs (29, 30) sont utilisés et une roue libre (47) associée au deuxième synchroniseur (30) déconnecte ce synchroniseur (30) dès que la vitesse équivalente de l'arbre primaire (7) correspondant au rapport intermédiaire est atteinte.

18. Procédé de changement de rapport de vitesses descendant avec couple positif pour passer d'un rapport initial (N) à un rapport final (N-1), ce procédé mettant en oeuvre la boîte (4) de vitesses définie selon l'une des revendications 1 à 13 et comportant les étapes suivantes :
- ouvrir l'embrayage (3) de manière à le mettre à la limite du couple fourni par le moteur (2) thermique,
- accélérer le moteur (2) thermique jusqu'à ce que l'arbre primaire (7) atteigne sensiblement le régime du rapport final (N-1) à engager,
- actionner le ou les synchroniseurs (29, 30) de manière à réduire progressivement le couple transmis par le rapport initial (N),
- dégager le rapport initial (N),
- actionner le ou les synchroniseurs (29, 30) de manière à réduire progressivement le couple transmis via ces synchroniseurs (29, 30), la réduction du couple étant commandée de manière à augmenter le régime de l'arbre primaire (7) jusqu'au régime du rapport final (N-1) à engager,
- engager le rapport final (N-1),
- réduire progressivement le couple transmis par le ou les synchroniseurs (29, 30) de manière que tout le couple soit transmis aux roues (5) par le rapport engagé (N-1), et
- fermer progressivement l'embrayage (3).

19. Procédé selon l'une des revendications 14 à 18, **caractérisé en ce que** l'utilisation du synchroniseur dépend du niveau de couple à transmettre lors du changement de rapport, le premier synchroniseur (29) étant utilisé pour les changements de rapport à faible couple, le deuxième synchroniseur (30) étant utilisé pour les changements de rapport à couple élevé.

## Claims

1. A gearbox (4) of the driven manual type comprising
- a primary shaft (7) intended to be connected to a thermal motor (2) and at least two secondary shafts (8.1, 8.2) intended to be connected to the wheels (5) of the vehicle, the primary shaft (7) being linked angularly to the two secondary shafts (8.1, 8.2) via gear-wheels forming the gear ratios, the two secondary shafts (8.1, 8.2) being linked to the wheels (5) via an axle drop (6),
- these gear-wheels each being formed by a wheel (10-13, 20) integral in rotation with the primary shaft (7) and by an idler gear (15-18, 23, 24) mounted on one of the two secondary shafts (8.1, 8.2) which mesh with each other, or by a wheel (10-13, 20) integral in rotation at one of the two secondary shafts (8.1, 8.2) and by an idler gear (15-18, 23, 24) mounted on the primary shaft (7) which mesh with each other,
- dog clutch sleeves (25-27) each able to be associated with at least one idler gear, these dog clutch sleeves (25-27) ensuring the gear ratio changes,
this gearbox further comprising:
- a first synchronizer (29) associated with a high gear ratio and a second synchronizer (30) associated with an intermediate gear ratio other than the first and the reverse gear;
**characterized in that**
the synchronizers (29, 30) are positioned between the idler gears (16, 18) of the gear ratios with which they are associated, such that each of these idler gears (16, 18) presents on one side a dog clutch sleeve (25, 26) and on the other a synchronizer (29, 30).

2. The gearbox according to Claim 1, **characterized in that** the first synchronizer is associated with the highest gear ratio of the gearbox.

3. The gearbox according to Claim 1 or 2, **characterized in that** it comprises at least four gear ratios, the first synchronizer (29) being associated with the highest gear ratio, the second synchronizer (30) being associated with the intermediate gear ratio.

4. The gearbox according to one of Claims 1 to 3,
**characterized in that** it comprises six gear ratios, the first synchronizer (29) being associated with the sixth gear ratio, the second synchronizer (30) being associated with the third gear ratio.

5. The gearbox according to one of Claims 1 to 4,
**characterized in that** the gear ratios are assembled in pairs with a single dog clutch sleeve (25-27) per pair.

6. The gearbox according to Claim 5, **characterized in that**:
- the first, third, fifth and sixth gear ratios are each formed by a wheel (10-13) linked in rotation to the primary shaft (7) and an idler gear (15-18) linked to the first secondary shaft (8.1),
- the second and fourth gear ratios are each formed by a wheel (20, 12) linked in rotation to the primary shaft (7) and an idler gear (23, 24) linked to the second secondary shaft (8.2).

7. The gearbox according to Claim 6, **characterized in that**:
- a first and a second sleeve (25, 26) mounted on the first secondary shaft (8.1) are respectively positioned between the idler gears (15, 16) of the first and third gear ratios, and between the idler gears (17, 18) of the fifth and sixth gear ratios,
- a third sleeve (27) mounted on the second secondary shaft (8.2) is positioned between the idler gears (23, 24) of the second and fourth gear ratios.

8. The gearbox according to Claim 7, **characterized in that**:
- the idler gear (18) of the sixth gear ratio presents on one side the sleeve (26) and on the other the first synchronizer (29), the idler gear (16) of the third gear ratio presents on one side the sleeve (25) and on the other the second synchronizer (30).

9. The gearbox according to one of Claims 1 to 8,
**characterized in that** the synchronizers (29, 30) are integrated in a sole double synchronizer displaced axially by means of a fork.

10. The gearbox according to one of Claims 1 to 8,
**characterized in that** the synchronizers (29, 30) are able to be actuated separately by two independent forks.

11. The gearbox according to one of Claims 1 to 8,
**characterized in that** the two synchronizers (29, 30) are able to be actuated simultaneously by means of a control device which exerts a force simultaneously on the synchronizers (29, 30).

12. The gearbox according to Claim 11, **characterized in that** a free wheel is placed between the idler gear (16) of the intermediate gear ratio and the second synchronizer (30).

13. The gearbox according to one of Claims 1 to 12, **characterized in that** the synchronizers which are used are synchronizers having high energy capacity, or clutches of the wet multi-disc type, or even dry clutches, or synchronizers of the wet multi-cone type.

14. An upward gear-shifting method with positive torque to shift from an initial gear ratio (N) to a final gear ratio (N+1), this method using the gearbox (4) defined according to one of Claims 1 to 13 and comprising the following stages:
- opening the clutch (3) so as to place it at the limit of the torque provided by the thermal motor (2),
- actuating the synchronizer or synchronizers (29, 30) so as to progressively reduce the torque transmitted by the initial gear ratio (N) up to zero torque,
- driving the speed of the primary shaft (7) until substantially reaching the speed of the final gear ratio (N+1) to be engaged by action on the synchronizer or synchronizers (29, 30),
- engaging the final gear ratio (N+1),
- reducing progressively the torque transmitted by the synchronizer or synchronizers (29, 30), such that the whole torque is transmitted to the wheels (5) by the final gear ratio (N+1), and
- progressively closing the clutch (3).

15. A method according to Claim 14, **characterized in that** with the upward passages carried out in the range comprised between the first gear ratio and the intermediate gear ratio associated with the second synchronizer (30), either the second synchronizer (30) is actuated alone, or the first and the second synchronizers (29, 30) together.

16. The method according to Claim 14, **characterized in that** with the upward passages carried out in the range comprised between the gear ratio associated with the second synchronizer (30) and the maximum gear ratio, solely the first synchronizer (29) is actuated.

17. The method according to Claim 14, **characterized in that** with the upward gear ratio shifts with a jump of the intermediate gear ratio associated with the second synchronizer (30), either the first synchronizer (29) is used alone, or the second synchronizer (30) is used until the equivalent speed of the intermediate gear ratio is reached, then the first synchronizer (29) is used, or the two synchronizers (29, 30) are used and a free wheel (47) associated with the second synchronizer (30) disconnects this synchronizer (30) as soon as the equivalent speed of the primary shaft (7), corresponding to the intermediate gear ratio, is reached.

18. A downward gear-shifting method with positive torque to shift from an initial gear ratio (N) to a final gear ratio (N-1), this method using the gearbox (4) defined according to one of Claims 1 to 13 and comprising the following stages:
- opening the clutch (3) so as to place it at the limit of the torque provided by the thermal motor (2),
- accelerating the thermal motor (2) until the primary shaft (7) reaches substantially the speed of the final gear ratio (N-1) to be engaged,
- actuating the synchronizer or synchronizers (29, 30) so as to reduce progressively the torque transmitted by the initial gear ratio (N),
- disengaging the initial gear ratio (N),
- actuating the synchronizer or synchronizers (29, 30) so as to reduce progressively the torque transmitted via these synchronizers (29, 30), the reduction of the torque being controlled so as to increase the speed of the primary shaft (7) up to the speed of the final gear ratio (N-1) to be engaged,
- engaging the final gear ratio (N-1),
- reducing progressively the torque transmitted by the synchronizer or synchronizers (29, 30) so that the whole torque is transmitted to the wheels (5) by the engaged gear ratio (N-1), and
- closing progressively the clutch (3).

19. The method according to one of Claims 14 to 18, **characterized in that** the use of the synchronizer depends on the level of the torque to be transmitted on the gear ratio shift, the first synchronizer (29) being used for low-torque gear ratio shifts, the second synchronizer (30) being used for high-torque gear ratio shifts.

## Patentansprüche

1. Schaltgetriebe (4) des manuellen gesteuerten Typs, das Folgendes aufweist:
- eine Hauptwelle (7), die dazu bestimmt ist, mit einem Verbrennungsmotor (2) verbunden zu werden, und mindestens zwei Nebenwellen (8.1, 8.2), die dazu bestimmt sind, mit den Rädern (5) des Fahrzeugs verbunden zu werden, wobei die Hauptwelle (7) winkelig mit den zwei Nebenwellen (8.1, 8.2) über Radgetriebe, die die Gänge bilden, verbunden ist, wobei die zwei Nebenwellen (8.1, 8.2) mit den Rädern (5) über eine Brückenabsenkung (6) verbunden sind,
- wobei diese Radgetriebe jeweils aus einem Rad (10-13, 20) ausgebildet sind, das in Drehung fest mit der Hauptwelle (7) verbunden ist, und aus einem Freilaufzahnrad (15-18, 23, 24), das auf eine der zwei Nebenwellen (8.1, 8.2), die ineinander eingreifen, montiert ist, oder durch ein Rad (10-13, 20), das in Drehung mit einer der zwei Nebenwellen (8.1, 8.2) und durch ein Freilaufzahnrad (15-18, 23, 24), das auf die Hauptwelle (7) montiert ist, die ineinander eingreifen, fest verbunden ist,
- Klauenkupplungshülsen (25-27), die jeweils mindestens einem Freilaufzahnrad zugewiesen werden können, wobei diese Klauenkupplungshülsen (25-27) die Gangwechsel sicherstellen,
wobei dieses Schaltgetriebe (4) ferner Folgendes aufweist:
- eine erste Synchronisierungseinrichtung (29), die zu einem hohen Gang gehört, und eine zweite Synchronisierungseinrichtung (30), die zu einem mittleren Gang gehört, der nicht der erste Gang und nicht der Rückwärtsgang ist,
**dadurch gekennzeichnet, dass**
die Synchronisierungseinrichtungen (29, 30) zwischen den Freilaufzahnrädern (16, 18), zu welchen sie gehören, derart positioniert sind, dass jedes dieser Freilaufzahnräder (16, 18) auf einer Seite eine Klauenkupplungshülse (25, 26) und auf der anderen Seite eine Synchronisierungseinrichtung (29, 30) aufweist.

2. Schaltgetriebe nach Anspruch 1, **dadurch gekennzeichnet, dass** die erste Synchronisierungseinrichtung zu dem höchsten Gang des Schaltgetriebes gehört.

3. Schaltgetriebe nach Anspruch 1 oder 2, **dadurch gekennzeichnet, dass** es mindestens vier Gänge aufweist, wobei die erste Synchronisierungseinrichtung (29) zu dem höchsten Gang gehört, wobei die zweite Synchronisierungseinrichtung (30) zu dem mittleren Gang gehört.

4. Schaltgetriebe nach einem der Ansprüche 1 bis 3, **dadurch gekennzeichnet, dass** es sechs Gänge aufweist, wobei die erste Synchronisierungseinrichtung (29) zu dem sechsten Gang und die zweite Synchronisierungseinrichtung (30) zu dem dritten Gang gehört.

5. Schaltgetriebe nach einem der Ansprüche 1 bis 4, **dadurch gekennzeichnet, dass** die Gänge in Paaren mit einer einzigen Klauenkupplungshülse (25-27) pro Paar vereint sind.

6. Schaltgetriebe nach Anspruch 5, **dadurch gekennzeichnet, dass**:
- der erste, dritte, fünfte und der sechste Gang jeweils aus einem Rad (10-13) bestehen, das in Drehung mit der Hauptwelle (7) verbunden ist, und aus einem Freilaufzahnrad (15-18), das mit der ersten Nebenwelle (8.1) verbunden ist,
- der zweite und vierte Gang jeweils aus einem Rad (20, 12) bestehen, das in Drehung mit der Hauptwelle (7) verbunden ist, und einem Freilaufzahnrad (23, 24), das mit der zweiten Sekundärwelle (8.2) verbunden ist.

7. Schaltgetriebe nach Anspruch 6, **dadurch gekennzeichnet, dass**:
- eine erste und eine zweite Hülse (25, 26), die auf die erste Nebenwelle (8.1) montiert sind, jeweils zwischen den Freilaufzahnrädern (15, 16) des ersten und des dritten Gangs und zwischen den Freilaufzahnrädern (17, 19) des fünften und des sechsten Gangs positioniert sind,
- eine dritte Hülse (27), die auf die zweite Nebenwelle (8.2) montiert ist, zwischen den Freilaufzahnrädern (23, 24) des zweiten und des vierten Gangs positioniert ist.

8. Schaltgetriebe nach Anspruch 7, **dadurch gekennzeichnet, dass**:
- das Freilaufzahnrad (18) des sechsten Gangs auf einer Seite die Hülse (26) und auf der anderen die erste Synchronisierungseinrichtung (29) aufweist,
wobei das Freilaufzahnrad (16) des dritten Gangs auf einer Seite die Hülse (25) und auf der anderen die zweite Synchronisierungseinrichtung (30) aufweist.

9. Schaltgetriebe nach einem der Ansprüche 1 bis 8, **dadurch gekennzeichnet, dass** die Synchronisierungseinrichtungen (29, 30) in eine einzige doppelte Synchronisierungseinrichtung, die mittels einer Gabel axial bewegt wird, eingebaut sind.

10. Schaltgetriebe nach einem der Ansprüche 1 bis 8, **dadurch gekennzeichnet, dass** die Synchronisierungseinrichtungen (29, 30) getrennt durch zwei voneinander unabhängige Gabeln betätigt werden können.

11. Schaltgetriebe nach einem der Ansprüche 1 bis 8, **dadurch gekennzeichnet, dass** die zwei Synchronisierungseinrichtungen (29, 30) gleichzeitig mittels einer Steuervorrichtung, die gleichzeitig eine Kraft auf die Synchronisierungseinrichtungen (29, 30) ausübt, betätigt werden können.

12. Schaltgetriebe nach Anspruch 11, **dadurch gekennzeichnet, dass** ein freies Rad zwischen dem Freilaufzahnrad (16) des mittleren Gangs und der zweiten Synchronisierungseinrichtung (30) angeordnet ist.

13. Schaltgetriebe nach einem der Ansprüche 1 bis 12, **dadurch gekennzeichnet, dass** die verwendeten Synchronisierungseinrichtungen Synchronisierungseinrichtungen mit hoher Energieleistung oder Kupplungen des Typs Multischeiben-Nasskupplungen oder sogar Trockenkupplungen oder Synchronisierungseinrichtungen des nassen Multikonustyps sind.

14. Verfahren zum Aufwärtsschaltgangwechseln mit positivem Moment, um von einem Anfangsgang (N) auf einen Endgang (N+1) zu schalten, wobei dieses Verfahren das Schaltgetriebe (4), das nach einem der Ansprüche 1 bis 13 definiert ist, umsetzt und die folgenden Schritte aufweist:
- Öffnen der Kupplung (3) derart, dass sie auf das Limit des Moments, das von dem Verbrennungsmotor (2) geliefert wird, gestellt wird,
- Betätigen der Synchronisierungseinrichtung(en) (29, 30) derart, dass das von dem Anfangsgang (N) übertragene Moment allmählich bis zum Moment gleich null verringert wird,
- Steuern der Drehzahl der Hauptwelle (7), bis im Wesentlichen die Drehzahl des Endgangs (N+1), der durch Betätigen der Synchronisierungseinrichtung(en) (29, 30) einzurücken ist, erzielt wird,
- Einrücken des Endgangs (N+1),
- allmähliches Verringern des von der/den Synchronisierungseinrichtung(en) (29, 30) übertragenen Moments derart, dass das ganze Moment auf die Räder (5) von dem Endgang (N+1) übertragen wird, und
- allmähliches Schließen der Kupplung (3).

15. Verfahren nach Anspruch 14, **dadurch gekennzeichnet, dass** man bei Hochschaltungen, die in dem Bereich zwischen zu ersten und dem mittleren Gang, der mit der zweiten Synchronisierungseinrichtung (30) gehört, ausgeführt werden, entweder die zweite Synchronisierungseinrichtung (30) allein oder die erste und die zweite Synchronisierungseinrichtung (29, 30) gemeinsam betätigt.

16. Verfahren nach Anspruch 14, **dadurch gekennzeichnet, dass** man bei Hochschaltungen, die in dem Bereich zwischen dem Gang, der zu der zweiten Synchronisierungseinrichtung (30) gehört, und dem höchsten Gang nur die erste Synchronisierungseinrichtung (29) betätigt.

17. Verfahren nach Anspruch 14, **dadurch gekennzeichnet, dass** bei Hochschaltgangwechseln mit Überspringen des mittleren Gangs, der zu der zweiten Synchronisierungseinrichtung (30) gehört, entweder die erste Synchronisierungseinrichtung (29) allein verwendet wird oder die zweite Synchronisierungseinrichtung (30) verwendet wird, bis die Drehzahl, die dem mittleren Gang entspricht, erreicht ist, wonach die erste Synchronisierungseinrichtung (29) verwendet wird, oder die zwei Synchronisierungseinrichtungen (29, 30) verwendet werden und ein Freilaufrad (47), das zur zweiten Synchronisierungseinrichtung (30) gehört, diese Synchronisierungseinrichtung (30) deaktiviert, sobald die äquivalente Drehzahl, der Hauptwelle (7), die dem mittleren Gang entspricht, erreicht ist.

18. Verfahren zum Abwärtsschalten mit positivem Moment, um von einem Anfangsgang (N) auf einen Endgang (N-1) zu schalten, wobei dieses Verfahren das Schaltgetriebe (4), das gemäß einem der Ansprüche 1 bis 13 definiert ist, umsetzt, und die folgenden Schritte aufweist:
- Öffnen der Kupplung (3) derart, dass sie auf das Limit des Moments, das der Verbrennungsmotor (2) liefert, gebracht wird,
- Beschleunigen des Verbrennungsmotors (2), bis die Hauptwelle (7) im Wesentlichen die Drehzahl des Endgangs (N-1), der einzurücken ist, erreicht,
- Betätigen der Synchronisierungseinrichtung(en) (29, 30) derart, dass das von dem Anfangsgang (N) übertragene Moment allmählich verringert wird,
- Ausrücken des Anfangsgangs (N)
- Betätigen der Synchronisierungseinrichtung(en) (29, 30) derart, dass das über diese Synchronisierungseinrichtungen (29, 30) übertragene Moment allmählich verringert wird, wobei die Verringerung des Moments derart gesteuert wird, dass die Drehzahl der Hauptwelle (7) bis zur Drehzahl des Endgangs (N-1), der einzurücken ist, erhöht wird,
- Einrücken des Endgangs (N-1),
- allmähliches Verringern des von der/den Synchronisierungseinrichtung(en) (29, 30) übertragenen Moments derart, dass das ganze Moment auf die Räder (5) von dem eingerückten Gang (N-1) übertragen wird, und
- allmähliches Schließen der Kupplung (3).

19. Verfahren nach einem der Ansprüche 14 bis 18, **dadurch gekennzeichnet, dass** der Einsatz der Synchronisierungseinrichtung von dem beim Gangwechsel zu übertragenden Momentniveau abhängt, wobei die erste Synchronisierungseinrichtung (29) für die Gangwechsel mit niedrigem Moment verwendet wird und die zweite Synchronisierungseinrichtung (30) für die Gangwechsel mit hohem Moment verwendet wird.
